# EUROPÄISCHE PATENTANMELDUNG

(11) **EP 3 878 671 A1**
(43) Veröffentlichungstag der Anmeldung: **15.09.2021**
(21) Anmeldenummer: 20161824.6
(22) Anmeldetag: 09.03.2020
(51) Int. Cl.: B60J 10/27, B60J 10/76

(54) **PROFIL MIT HILFSPROFILABSCHNITT**

(71) Anmelder: Stefan Pfaff Werkzeug- und Formenbau GmbH Co KG, 88167 Röthenbach im Allgäu (DE)
(72) Erfinder: SCHLACHTER, Rolf, 88171 Weiler-Simmerberg (DE)
(74) Vertreter: Otten, Roth, Dobler & Partner mbB Patentanwälte

(57) **Zusammenfassung**

Es wird ein Profil, welches ein biegeschlaffes Formteil umfasst, sowie ein Verfahren zur Herstellung eines solchen Profils vorgeschlagen. Eine Stabilisierung wird erfindungsgemäß dadurch erreicht, dass es einen Hilfsprofilabschnitt zur Stabilisierung zur Handhabung und Bearbeitung aufweist, welcher einen Verbindungssteg und ein stabilisierendes Element in Form eines Profilabschnitts umfasst, wobei der Verbindungssteg das biegeschlaffe Formteil und das stabilisierende Element verbindet, wobei der Hilfsprofilabschnitt über die gesamte Länge oder über eine Teillänge des Profils über den Verbindungssteg verbunden ist.

## Beschreibung

Die Erfindung betrifft ein Profil, welches ein biegeschlaffes Formteil umfasst, insbesondere Fensterführungsprofil für Kraftfahrzeuge gemäß dem Oberbegriff des Anspruchs 1 sowie einem Verfahren zur Herstellung eines solchen Profils nach Anspruch 8.

Es sind in der Spritzgießerei biegeschlaffe Profile, wie beispielsweise für Fensterführungen an Automobilen, bekannt. Diese sind aufgrund ihrer mechanischen Eigenschaften für eine weitere, maschinelle Bearbeitung schwierig handzuhaben.
Ebenso gehören spritzgegossene Profile zum Stand der Technik, bei denen eingebaute Hilfsträger, auch bekannt als Carrier, beispielsweise aus Metall, für eine höhere Stabilität sorgen. Diese sind aber für die Herstellung von biegeschlaffen Profilen unzweckmäßig, da die Carrier erst aufwendig in das Profil eingebracht werden und später gegebenenfalls wieder entnommen werden muss, was die Herstellung bedeutend kostenintensiver werden lässt.

Aufgabe der Erfindung ist es demgegenüber, ein Profil mit biegeschlaffem Formteil vorzuschlagen, das wenigstens teilweise die Nachteile des Standes der Technik verbessert.
Diese Aufgabe wird, ausgehend von einem Profil der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Profil dadurch aus, dass es einen Hilfsprofilabschnitt einerseits zur Stabilisierung, andererseits als Grifffläche für Werkzeuge oder Trägersystemen zur weiteren Handhabung und Bearbeitung aufweist, welcher einen Verbindungssteg und ein stabilisierendes Element in Form eines Hilfsprofilabschnitts umfasst. Dabei verbindet der Verbindungssteg das biegeschlaffe Formteil und das stabilisierende Element, während der Verbindungssteg mit dem Hilfsprofilabschnitt entweder über die gesamte Länge oder auch nur über eine Teillänge verbunden ist. Da das stabilisierende Element nur bedingt biegsam ausgebildet ist, kann zumindest über die Länge, über die eine Verbindung zwischen stabilisierendem Element und biegeschlaffem Formteil besteht, eine Formstabilität bewirkt werden.
Dabei ist von Vorteil, wenn der Verbindungssteg an der Außenseite des biegeschlaffen Formteils angebracht ist. Somit ist zum einen auch das stabilisierende Element leichter für Griffwerkzeuge bzw. Halterungswerkzeuge zugänglich, kann aber zum anderen auch gegebenenfalls leichtet wider abgetrennt werden.

Vorzugsweise ist der Hilfsprofilabschnitt im gleichen Verfahrensschritt wie das biegeschlaffe Formteil und insbesondere aus dem gleichen Material miteinander verbunden hergestellt, wobei vorzugsweise das biegeschlaffe Formteil zusammen mit dem Hilfsprofilabschnitt im gleichen Verfahrensschritt gespritzt oder extrudiert worden ist. Dabei ist der Verfahrensschritt idealerweise als derselbe Spritzguss bzw. dieselbe Extrusion zu verstehen, wenigstens aber als in derselben Gussform oder derselben Station im Herstellungsverfahren hergestellt, damit bei der Herstellung die Zeit als Ressource möglichst geschont wird. Ein nachträgliches Anspritzen respektive Extrudieren des Hilfsprofilabschnitts ist technisch möglich, erfordert aber einen separaten Verfahrensschritt und kostet zusätzlich Zeit.
Vorteilhafterweise wird der Hilfsprofilabschnitt derart hergestellt, dass das stabilisierende Element im Querschnitt ein Polygon und/oder eine Kreisform aufweist, sodass es von einem Werkzeug und/oder Trägersystem mit einer entsprechend ausgebildeten Kavität aufnehmbar ist. Die Handhabung während der weiteren Bearbeitung des Profils kann so erleichtert und präzisiert werden, da durch geschickte Wahl der Form des stabilisierenden Elements und der passenden Kavität ein Verdrehen oder Verrutschen des Profils im Werkzeug vermieden werden kann.
Bei einer vorteilhaften Weiterbildung weist das stabilisierende Element im Querschnitt eine größere Ausdehnung auf als der Verbindungssteg, sodass das stabilisierende Element eine ausreichende Masse aufweist um die Stabilität leisten zu können, der Steg jedoch, auch aus Gründen Ressourcen- und Kostenschonung, deutlich dünner ausgestaltet ist.
Vorteilhafterweise sind Verbindungssteg und stabilisierendes Element nach Abschluss der Profilbearbeitung vollständig abtrennbar, was durch einen vergleichsweise schmalen Steg erreicht wird. Beispielsweise kann diese Abtrennung durch Stanz- oder Schneidewerkzeuge erfolgen. Denkbar sind auch Sollbruchstellen oder Verengungen im Stegprofil, um eine Abtrennung zu vereinfachen. Sollte der Hilfsprofilabschnitt aber noch genutzt werden können, muss er grundsätzlich auch nicht vom Profil abgetrennt werden.

Das Verfahren zur Herstellung eines Profils, bestehend aus einem biegeschlaffen Formteil insbesondere Fensterführungsprofil für Kraftfahrzeuge und einem Hilfsprofilabschnitt zur Stabilisierung zur Handhabung und Bearbeitung, wobei der Verbindungssteg das biegeschlaffe Formteil und das stabilisierende Element verbindet, zeichnet sich dadurch aus, dass der Hilfsprofilabschnitt im gleichen Verfahrensschritt wie das biegeschlaffe Formteil und insbesondere aus dem gleichen Material miteinander verbunden hergestellt wird, sodass der Verbindungssteg den Hilfsprofilabschnitt über die gesamte Länge oder über ein Teillänge verbindet. Dadurch können kosten- und bautechnisch aufwändigere Stabilisierungen, wie integrierte Metallteile bzw. Carrier, vermieden werden.

Ein vorteilhaftes Verfahren ist, wenn das biegeschlaffe Formteil zusammen mit dem Hilfsprofilabschnitt gespritzt oder extrudiert wird. Hierdurch erspart man sich zum einen einen weiteren Arbeitsschritt, zum anderen stellt man sicher, dass die Verbindung zwischen Profil und Hilfsprofilabschnitt ausreichend belastbar ist.

Vorzugsweise wird der Hilfsprofilabschnitt nach Abschluss der Profilbearbeitung wenigstens teilweise, insbesondere vollständig entlang des Verbindungssteges und/oder zusammen mit dem Verbindungssteg abgetrennt.
Bei ausreichenden Platzverhältnissen am finalen Einbauort kann der Hilfsprofilabschnitt am biegeschlaffen Formteil verbleiben, sodass der Verfahrensschritt der Abtrennung des Hilfsprofilabschnitts übersprungen werden kann.

### Ausführungsbeispiel

Ein Ausführungsbeispiel der Erfindung ist in der Zeichnung dargestellt und wird anhand der Figuren nachfolgend näher erläutert.

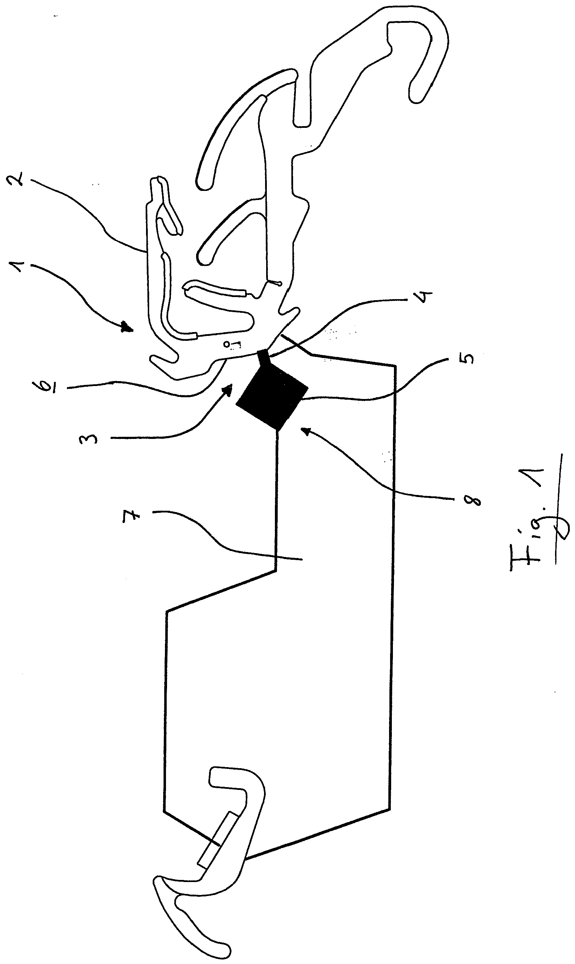

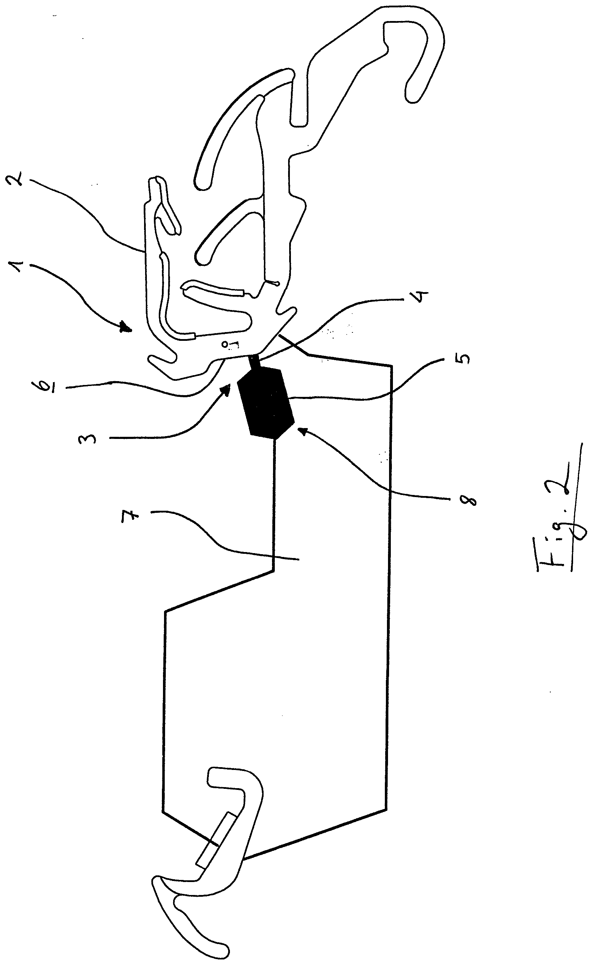

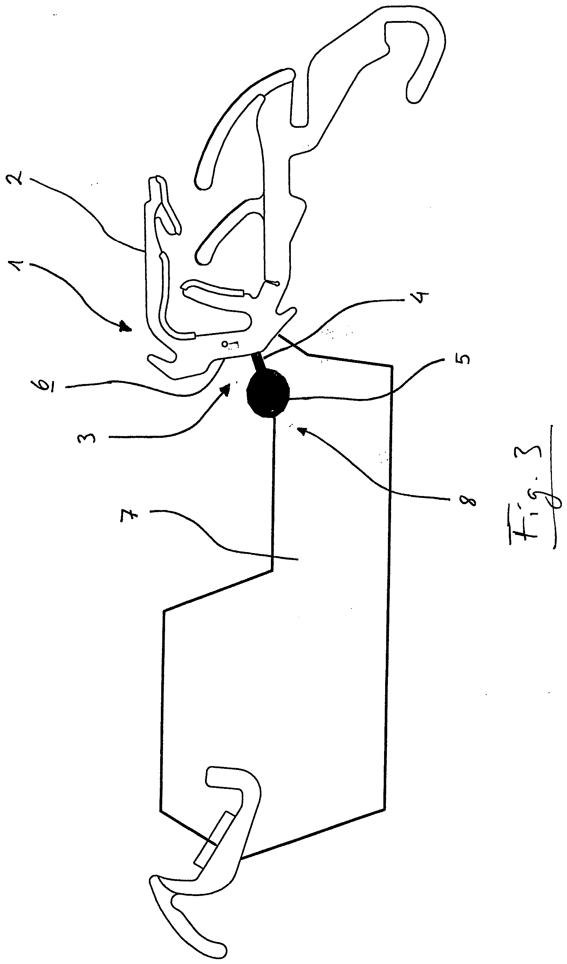

Im Einzelnen zeigen die Figuren 1-3 einen schematischen Aufbau eines Profils 1 im Sinne der Erfindung im Querschnitt, wobei dieses Profil 1 ein biegeschlaffes Formteil 2 und einen Hilfsprofilabschnitt 3 umfasst. Dieser Hilfsprofilabschnitt 3 umfasst ein stabilisierendes Element 5 und einen Verbindungssteg 4, der das stabilisierende Element 5 an der Außenseite 6 des biegeschlaffen Formteil 2 mit dem biegeschlaffen Formteil 2 verbindet. Weiter ist ein Trägersystem 7 dargestellt, welches das stabilisierende Element 5 mit seiner Querschnittsform in einer entsprechend dazu ausgebildeten Kavität 8 zum Transport oder zur weiteren Bearbeitung aufnehmen kann.

Dabei weist das stabilisierende Element 5 in
- Figur 1: im Querschnitt eine rechteckige Form, in
- Figur 2: im Querschnitt eine sechseckige Form,
- Figur 3: im Querschnitt eine polygone Form
auf.

Grundsätzlich sind im Querschnitt auch weitere Polygone oder runde Formen des stabilisierenden Elements 5 möglich. Durch die Biegesteifigkeit des stabilisierenden Elements 5, die idealerweise durch eine massive Bauart des stabilisierenden Elements 5 zustande kommt, wird der über den Verbindungssteg 4 verbundene Abschnitt des biegeschlaffen Formteils 2 in Form gehalten.

Denkbar sind Sollbruchstellen oder Verengungen im Verbindungsstegprofil 4, die ein Abtrennen des Hilfsprofilabschnitts 3 erleichtern, aber trotzdem noch eine ausreichend starke Verbindung zwischen biegeschlaffem Formteil 2 und stabilisierendem Element 5 aufweisen, sodass diese Verbindung nicht bereits während der Bearbeitung unterbrochen wird.

### Bezugszeichenliste

- 1: Profil
- 2: biegeschlaffes Formteil
- 3: Hilfsprofilabschnitt
- 4: Verbindungssteg
- 5: stabilisierendes Element
- 6: Außenseite
- 7: Trägersystem
- 8: Kavität

## Patentansprüche

1. Profil (1), welches ein biegeschlaffes Formteil (2) umfasst, insbesondere Fensterführungsprofil für Kraftfahrzeuge, **dadurch gekennzeichnet, dass** es einen Hilfsprofilabschnitt (3) zur Stabilisierung zur Handhabung und Bearbeitung aufweist, welcher einen Verbindungssteg (4) und ein stabilisierendes Element (5) in Form eines Profilabschnitts umfasst, wobei der Verbindungssteg (4) das biegeschlaffe Formteil (2) und das stabilisierende Element (5) verbindet, wobei der Hilfsprofilabschnitt (3) über die gesamte Länge oder über eine Teillänge des Profils (1) über den Verbindungssteg (4) verbunden ist.

2. Profil (1) nach einem der vorgenannten Ansprüche, **dadurch gekennzeichnet, dass** der Verbindungssteg (4) an der Außenseite (6) eines geklappten biegeschlaffen Profils (2) angebracht ist.

3. Profil (1) nach einem der vorgenannten Ansprüche, **dadurch gekennzeichnet, dass** der Hilfsprofilabschnitt (3) im gleichen Verfahrensschritt wie das biegeschlaffe Formteil (2) und insbesondere aus dem gleichen Material miteinander verbunden hergestellt ist, wobei vorzugsweise das beigeschlaffe Profil (2) zusammen mit dem Hilfsprofilabschnitt (3) im gleichen Verfahrensschritt gespritzt oder extrudiert worden ist.

4. Profil (1) nach einem der vorgenannten Ansprüche, **dadurch gekennzeichnet, dass** das stabilisierende Element (5) im Querschnitt ein Polygon und/oder eine Kreisform aufweist, sodass es von einem Werkzeug und/oder Trägersystem (7) mit einer entsprechend ausgebildeten Kavität (8) aufnehmbar ist.

5. Profil (1) nach einem der vorgenannten Ansprüche, **dadurch gekennzeichnet, dass** das stabilisierende Element (5) im Querschnitt eine größere Ausdehnung aufweist als der Verbindungssteg (4).

6. Profil (1) nach einem der vorgenannten Ansprüche, **dadurch gekennzeichnet, dass** der Hilfsprofilabschnitt (3) über die gesamte und/oder über mindestens einen Teil der Länge des biegeschlaffen Formteils (2) befestigt ist.

7. Profil (1) nach einem der vorgenannten Ansprüche, **dadurch gekennzeichnet, dass** Verbindungssteg (4) und stabilisierendes Element (5) nach Abschluss der Profilbearbeitung vollständig abtrennbar sind.

8. Verfahren zur Herstellung eines Profils (1), bestehend aus einem biegeschlaffen Formteil (2) insbesondere Fensterführungsprofil für Kraftfahrzeuge und einem Hilfsprofilabschnitt (3) zur Stabilisierung zur Handhabung und Bearbeitung, welcher einen Verbindungssteg (4) und ein stabilisierendes Element (5) in Form eines Profilabschnitts umfasst, wobei der Verbindungssteg (4) das biegeschlaffe Formteil (2) und das stabilisierende Element (5) verbindet, **dadurch gekennzeichnet, dass** der Hilfsprofilabschnitt (3) im gleichen Verfahrensschritt wie das biegeschlaffe Formteil (2) und insbesondere aus dem gleichen Material miteinander verbunden hergestellt wird, sodass der Hilfsprofilabschnitt über die gesamte Länge oder über ein Teillänge des Profils (1) über den Verbindungssteg (4) verbunden ist.

9. Verfahren nach einem der vorgenannten Ansprüche, **dadurch gekennzeichnet, dass** der Hilfsprofilabschnitt (3) im gleichen Verfahrensschritt wie das biegeschlaffe Formteil (2) und insbesondere aus dem gleichen Material miteinander verbunden hergestellt ist, wobei vorzugsweise das beigeschlaffe Profil (2) zusammen mit dem Hilfsprofilabschnitt (3) im gleichen Verfahrensschritt gespritzt oder extrudiert wird.

10. Verfahren nach einem der vorgenannten Ansprüche, **dadurch gekennzeichnet, dass** der Hilfsprofilabschnitt (3) nach Abschluss der Profilbearbeitung wenigstens teilweise, insbesondere vollständig entlang des Verbindungssteges (4) und/oder zusammen mit dem Verbindungssteg (4) abgetrennt wird.
